# EUROPÄISCHE PATENTSCHRIFT

(11) **EP 3 417 283 B1**
(45) Veröffentlichungstag und Bekanntmachung des Hinweises auf die Patenterteilung: **04.09.2019**
(21) Anmeldenummer: 16706817.0
(22) Anmeldetag: 17.02.2016
(51) Int. Cl.: G01N 21/17, G01N 21/88, G01N 21/45, G01N 29/24

(54) **METROLOGIEVORRICHTUNG UND METROLOGIEVERFAHREN**
METROLOGY APPARATUS AND METROLOGY METHOD
DISPOSITIF ET PROCÉDÉ DE MÉTROLOGIE

(43) Veröffentlichungstag der Anmeldung: 26.12.2018
(73) Patentinhaber: EV Group E. Thallner GmbH, 4782 St. Florian am Inn (AT)
(72) Erfinder: EIBELHUBER, Martin, 4910 Ried im Innkreis (AT); HEILIG, Markus, 76187 Karlsruhe (DE); POVAZAY, Boris, 1220 Wien (AT)
(74) Vertreter: Schneider, Sascha
(86) Internationale Anmeldenummer: PCT/EP2016/053327
(87) Internationale Veröffentlichungsnummer: WO 2017/140353

(56) Entgegenhaltungen:
- WO-A1-99/61866
- WO-A1-2008/103209
- WO-A1-2012/062343
- US-A1- 2005 120 803
- US-A1- 2012 157 837
- US-A1- 2013 160 552

## Beschreibung

Die vorliegende Erfindung betrifft eine Metrologievorrichtung gemäß Patentanspruch 1 sowie ein korrespondierendes Metrologieverfahren gemäß Patentanspruch 6.

Im Stand der Technik werden vor allem rein akustische Messverfahren angewendet, mit deren Hilfe ein gebondeter Substratstapel auf seinen Aufbau und/oder auf Fehler hin untersucht werden kann. Zur Einkopplung eines Schallsignals wird meistens der gesamte Substratstapel in eine Flüssigkeit, insbesondere Wasser, gelegt.

Die Entgegenhaltung WO 2012/062343 A1 offenbart eine Messeinrichtung zur Messung von Schichtdicken und Fehlstellen mehrerer Schichten eines Waferstapels.

Es existieren außerdem elektromagnetische Messmethoden und Anlagen, mit deren Hilfe man einen Substratstapel vermessen kann. Dabei werden elektromagnetische Strahlen in den Substratstapel eingeleitet und deren Reflexion vermessen. Ein solches Verfahren ist in der WO2012062343A1 offenbart.

Das größte Problem stellt eine Benetzung des Substratstapels mit Flüssigkeit dar. Eine derartige Benetzung ist aus mehrerlei Gründen unerwünscht. Erstens muss der Substratstapel nach der Entnahme aus der Anlage getrocknet werden und zweitens kann Flüssigkeit in die Grenzfläche zwischen den Substraten eindringen.

Die elektromagnetischen Messverfahren haben den Nachteil, dass die Information durch die limitierte Eindringtiefe der elektromagnetischen Strahlen beschränkt ist. Sie dringen, insbesondere auf Grund metallischer Bauteile mit hoher Absorption, nur in eine relativ geringe Tiefe des Substratstapel ein. Des Weiteren ist das reflektierte Messsignal nach dem Austritt aus dem Substratstapel empfindlich geschwächt. Darüber hinaus werden meist scannende/abtastende Methoden verwendet, also Methoden, bei denen der Substratstapel eine Relativbewegung zu einem scharf fokussierten und den Substratstrahl abtastenden, Strahl absolviert. Diese Relativbewegung ist extrem zeitintensiv und somit kostspielig.

Aufgabe der vorliegenden Erfindung ist es daher, eine Metrologievorrichtung und ein Metrologieverfahren anzugeben, mit welchen die Überprüfung von Substratstapeln schnell, trocken, hochgenau, zuverlässig und kostengünstig erfolgt.

Diese Aufgabe wird mit den Merkmalen der Patentansprüche 1 und 6 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Grundgedanke der vorliegenden Erfindung ist es dabei, eine, insbesondere gleichzeitige, Beaufschlagung eines Substratstapels mit Schallwellen und einem ersten Strahlengang von elektromagnetischen Wellen, insbesondere von unterschiedlichen, vorzugsweise gegenüberliegenden, Seiten des Substratstapels, durchzuführen. Mittels eines nicht zum Substratstapel geführten zweiten, insbesondere zeitgleich mit dem ersten Strahlengang von einer Quelle ausgesendeten, Strahlengang der elektromagnetischen Wellen und Interferenzbildung mit dem ersten Strahlengang wird eine Vermessung/Auswertung des Substratstapels, insbesondere auf Fehlstellen ermöglicht.

Mit anderen Worten lehrt die Erfindung insbesondere eine Anlage und eine Methode, um ein dreidimensionales Bild eines Substratstapels durch (Ultra-)Schallanregung und Interferenzmessung zu erzeugen.

Die Erfindung ist geeignet, einzelne Substrate, die nicht zu einem Substratstapel verbunden sind, zu vermessen. Die Vermessung von Substratstapeln ist die bevorzugte Ausführungsform. Soweit auf Substratstapel Bezug genommen wird oder Substratstapel beschrieben werden, soll die Beschreibung auch für, insbesondere einzelne, Substrate gelten.

Die Substrate/Substratstapel können jede beliebige Form besitzen, sind aber bevorzugt kreisrund. Der Durchmesser der Substrate ist insbesondere industriell genormt. Für Wafer sind die industrieüblichen Durchmesser, 1 Zoll, 2 Zoll, 3 Zoll, 4 Zoll, 5 Zoll, 6 Zoll, 8 Zoll, 12 Zoll und 18 Zoll. Weitere spezielle Ausführungsformen sind rechteckige Substrate, sogenannte panels. Die erfindungsgemäße Ausführungsform kann aber grundsätzlich jedes Substrat, unabhängig von dessen Durchmesser handhaben. Dementsprechende mittlere Durchmesser haben die aus den Substraten aufgebauten Substratstapel.

Die mittlere Dicke eines Substrats liegt insbesondere zwischen 5000 µm und 50 µm, vorzugsweise zwischen 2500 µm und 100 µm, noch bevorzugter zwischen 1500 µm und 200 µm, am bevorzugtesten zwischen 1000 µm und 500 µm, am allerbevorzugtesten um die 750 µm.

Die Erfindung betrifft insbesondere eine Anlage und eine Methode zur Vermessung, insbesondere zur Fehlstellendetektion, eines Substratstapels. Bei der Erfindung handelt es sich vorzugsweise um ein akusto-optisches Verfahren. Bei dem akusto-optischen Verfahren wird eine Schallwelle, insbesondere vollflächig, an einer ersten Sdubstratstapeloberfläche, der Substratstapelfixieroberfläche, des Substratstapels eingekoppelt. Die erzeugten Schallwellen pflanzen sich durch den Substratstapel bis an die, der ersten Substratstapeloberfläche gegenüberliegende, zweite Substratstapeloberfläche, die Substratstapelmessoberfläche, fort. Vorzugsweise werden entlang der Substratstapeloberfläche lokal unterschiedliche, insbesondere einzeln ansteuerbare, Schallwellen erzeugt.

Eine durch die Schallwellen induzierte lokale Veränderung (insbesondere Verformung und/oder Schwingung) der Substratstapelmessoberfläche wird durch mehrere Teilstrahlen eines vorher erzeugten und verbreiterten Strahls (erster Strahlengang), erfasst. Durch vorzugsweise Verwendung eines Interferometers kann ein Primärstrahl (zweiter Strahlengang) mit dem reflektierten Sekundärstrahl (erster Strahlengang), insbesondere durch Parallelisierung, zur Überlagerung gebracht werden. Durch die Breite des Strahls entsteht ein flächiges Interferenzmuster, das von einem Detektor, insbesondere einem CCD Detektor, erfasst und aufgezeichnet werden kann.

Durch die, insbesondere örtlich variierende, Ultraschallanregung ergeben sich sequenziell eine Vielzahl von Interferenzbildern, die durch mathematische Algorithmen in ein dreidimensionales Bild des vermessenen Substratstapels umgerechnet werden können. Durch das dreidimensionale Bild sind insbesondere Fehlstellen erkennbar.

Erfindungsgemäß bevorzugt kann vorzugsweise auf ein Flüssigkeitsbad verzichtet werden. Es erfolgt höchstens eine räumlich begrenzte Benetzung einer Flachseite des Substratstapels.

Durch eine zumindest überwiegend in einem Schritt (also ohne Abrastern des Substratstapels) und/oder vollflächig durchgeführte Erfassung ist ein punktförmiges Abscannen des Substratstapels nicht notwendig.

Die Erfindung beschreibt eine Anlage und ein Verfahren zur zerstörungsfreien Vermessung, insbesondere von Fehlstellen, eines Objekts, insbesondere eines Substratstapels. Im weiteren Verlauf der Druckschrift wird nur mehr von einem Substratstapel gesprochen.

Die Erfindung besteht aus mehreren, nachfolgend beschriebenen Elementen, die jedes für sich gesehen als eigenständige Erfindung betrachtet werden können und offenbart werden:

### Schallbeaufschlagungsmittel, insbesondere Schallprobenhalter

Das, insbesondere auch als Schallprobenhalter ausgebildete, Schallbeaufschlagungsmittel dient der Erzeugung von Schallwellen und Beaufschlagung des Substratstapels mit den erzeugten Schallwellen. Bei den Schallwellen handelt es sich erfindungsgemäß bevorzugt um Ultraschallwellen. Erfindungsgemäß denkbar ist auch die Erzeugung von Megaschall- oder Infraschallwellen. Die Übergänge der Frequenzbereiche der vorgenannten Schallwellen sind fließend.

Der erfindungsgemäß bevorzugte Frequenzbereich für Infraschallwellen liegt zwischen 0.001 Hz und 16 Hz, vorzugsweise zwischen 0.01 Hz und 16 Hz, noch bevorzugter zwischen 1 Hz und 16 Hz, am bevorzugtesten zwischen 5 Hz und 16 Hz.

Der erfindungsgemäß bevorzugte Frequenzbereich für Megaschall liegt zwischen 400 kHz und 2 MHz, vorzugsweise zwischen 600 kHz und 2 MHz, noch bevorzugter zwischen 1 MHz und 2 MHz, am bevorzugtesten zwischen 1,5 MHz und 2 MHz.

Der erfindungsgemäß bevorzugte Frequenzbereich für Ultraschall liegt zwischen 16 kHz und 1 GHz, vorzugsweise zwischen 100 kHz und 1 GHz, noch bevorzugter zwischen 1 MHz und 1 GHz, am bevorzugtesten zwischen 500 MHz und 1 GHz.

In einer allgemeinen Ausführungsform erzeugt der Schallprobenhalter eine Schwingung zwischen 0.0001 Hz und 1 GHz.

Zur Erzeugung eines Abbilds der 3D Struktur des Substratstapels wird insbesondere mehr als eine Frequenz verwendet, vorzugsweise ein gesamtes Frequenzband.

Das Schallbeaufschlagungsmittel ist vorzugsweise so ausgebildet, dass es die Schallwellen ortsaufgelöst erzeugen kann, insbesondere durch Vorsehen einer Vielzahl von, vorzugsweise in einem array, noch bevorzugter in einem phased array, angeordneten, Schallquellen. Die einzelnen Schallquellen sind vorzugsweise punktförmig. Derartige punktförmige Schallquellen können durch eine entsprechende Schaltung zu Linienschallquellen, Flächenschallquellen oder Musterschallquellen zusammengeschaltet und/oder fokussiert werden. Insbesondere ist durch eine direkte Ansteuerung der Schallquellen auch die gezielte Erzeugung einer spezifischen Schallwellenfront möglich.

Das Schallbeaufschlagungsmittel, insbesondere der Schallprobenhalter, besteht vorzugsweise aus einem Grundkörper und mehreren, insbesondere symmetrisch angeordneten, Schallquellen. Die Schallquellen sind vorzugsweise rasterförmig angeordnet.

Die Schallquellen können beliebige Formen besitzen. Der Querschnitt der Schallquellen ist insbesondere
- rechteckig, vorzugsweise quadratisch oder
- dreieckig oder
- sechseckig oder
- rund.

Bei den Schallquellen handelt es sich insbesondere um
- Elektrische Schallgeber, insbesondere Piezoelemente und/oder
- Hydraulische Schallgeber und/oder
- Pneumatische Schallgeber und/oder
- Magnetische Schallgeber und/oder
- Kapazitiv angesteuerte Membran.

Erfindungsgemäß bevorzugt werden Piezoelemente verwendet.

Die Schallquellen sind gemäß eine vorteilhaften Ausführungsform der Erfindung einzeln ansteuerbar ausgebildet. Insbesondere ergibt sich daraus die Möglichkeit, Phasenbeziehungen zwischen den emittierten Schallwellen und/oder Sequenzen von verschiedenen Schallwellenformen zu erzeugen.

In einer ganz besonders bevorzugten erfindungsgemäßen Ausführungsform sind die Schallquellen auf und/oder in den Noppen eines Noppenprobenhalters eingebaut. Bei einem Noppenprobenhalter handelt es sich um eine spezielle Art von Probenhalter, bei dem das Substrat, insbesondere der Substratstapel, nicht vollflächig, sondern auf mehrere, insbesondere symmetrisch verteilten, Erhebungen, den Noppen, aufliegt. Ein derartiger Probenhalter ist beispielsweise in der Druckschrift WO2015113641A1 offenbart, auf die insoweit Bezug genommen wird.

Das Schallbeaufschlagungsmittel, insbesondere der Schallprobenhalter, verfügt vorzugsweise über Koppelmediumkanäle, über die ein Koppelmedium zwischen die Schallquellen und den Substratstapel eingebracht werden kann. Die Koppelmediumkanäle können sich an jeder beliebigen Position des Schallprobenhalters befinden, befinden sich aber vorzugsweise am Rand oder zwischen dem Umfang und den Schallquellen, um die Anordnung der rasterförmig angeordneten Schallquellen nicht zu behindern. Vorzugsweise werden die Koppelmediumkanäle symmetrisch angeordnet.

Gemäß einer vorteilhaften Ausführungsform weist das Schallbeaufschlagungsmittel einen durch den Substratstapel abschließbaren Raum zur Aufnahme des Koppelmediums auf. Der Raum wird gegenüberliegend zum Substratstapel von den Schallgebern und seitlich von einem umlaufenden Steg begrenzt.

Der Schallprobenhalter verfügt gemäß einer weiteren erfindungsgemäßen Ausführungsform über Fixiermittel, mit denen der Substratstapel am Schallprobenhalter fixiert oder fixierbar ist. Vorzugsweise wird der Substratstapel zuerst mit den Fixiermitteln fixiert und das Koppelmedium danach eingebracht. Dadurch wird sichergestellt, dass der Substratstapel einerseits fixiert, andererseits aber optimal über das Koppelmedium mit den Schallquellen verbunden ist. Ein vorher eingebrachtes Koppelmedium würde sich über die gesamte Fixierfläche verteilen und eine Fixierung durch die Fixiermittel erschweren oder sogar verhindern. Die Fixiermittel können sich an jeder beliebigen Position des Schallprobenhalters befinden, befinden sich aber vorzugsweise am Rand, insbesondere unterhalb des Substratstapels, um die Anordnung der rasterförmig angeordneten Schallquellen nicht zu behindern. Vorzugsweise werden die Fixiermittel symmetrisch angeordnet.

Bei den Fixiermitteln kann es sich insbesondere um folgende Elemente handeln:
- Vakuumfixierungen und/oder
- Adhäsive Oberflächenfixierungen, insbesondere schaltbare adhäsive Oberflächenfixierungen, und/oder
- Elektrostatische Fixierungen und/oder
- Magnetische Fixierungen und/oder
- Mechanische Fixierungen, insbesondere Klemmen.

Der Schallprobenhalter verfügt vorzugsweise über Ladestifte, mit denen der Substratstapel am Schallprobenhalter geladen und entladen werden kann. Die Ladestifte können sich an jeder beliebigen Position des Schallprobenhalters befinden, befinden sich aber vorzugsweise am Rand um die Anordnung der rasterförmig angeordneten Schallquellen nicht zu behindern. Vorzugsweise werden die Ladestifte symmetrisch angeordnet.

Der Schallprobenhalter ist vorzugsweise als Translationstisch ausgelegt oder auf einem Translationstisch fixierbar. Zwischen dem Schallprobenhalter und dem erfindungsgemäßen, weiter unten detailliert beschriebenen, (insbesondere als Aufbau ausgebildeten) optischen System ist eine Relativbewegung ausführbar. Die Relativgeschwindigkeit ist insbesondere größer als 1 µm/s, insbesondere größer als 1 mm/s, noch bevorzugter größer als 1 cm/s. Durch eine Relativbewegung zwischen dem Schallprobenhalter und dem optischen Aufbau, genauer gesagt dem vermessenden Teilstrahlenfeld, kann eine Erhöhung der Auflösung erzielt werden. Durch die Möglichkeit einer Relativbewegung ist eine abrasternde Messung möglich. Dabei wird die gesammelte Intensitätsinformation am Detektor mit einer x-y Position des Schallprobenhalters verbunden. Denkbar wäre beispielsweise die Verwendung eines örtlich fokussierten Primärstrahls PB", der nicht auf die volle Substratstapelgröße verbreitert wird. Dadurch erhält man nur die Information aus einem kleinen Teilgebiet des Substratstapels. Durch eine Relativbewegung kann dennoch der gesamte Substratstapel vermessen werden. Derartige 2D Scan Methoden können den Vorteil erhöhter Auflösungen mit sich bringen, sind aber naturgemäß langsamer als die instantane/unmittelbare Vermessung des gesamten Substratstapels.

Möchte man auf Relativbewegungen gänzlich verzichten und wird keine vollflächige Bestrahlung des Substratstapels verwendet, dann ist auch das Abrastern der Substratstapeloberfläche mit einem örtlich begrenzten Strahl möglich. Dazu wird bevorzugt das gesamte optische System auf die Rasterung ausgelegt.

Das Schallbeaufschlagungsmittel, insbesondere der Schallprobenhalter, kann im Dauerbetrieb oder im Pulsbetrieb betrieben werden. Unter Dauerbetrieb versteht man die zeitlich anhaltende Verwendung der Schallquellen ohne oder mit vernachlässigbar geringer Unterbrechung. Unter Pulsbetrieb versteht man die einmalige, insbesondere kurzzeitige, Verwendung der Schallquellen, gefolgt von einem Zeitintervall der Nichtverwendung der Schallquellen. Der Pulsbetrieb ist erfindungsgemäß bevorzugt.

Das Schallbeaufschlagungsmittel, insbesondere der Schallprobenhalter, vorzugsweise die einzelnen Schallquellen, arbeitet bzw. arbeiten insbesondere im Pulsbetrieb, insbesondere in einem Frequenzbereich zwischen 1 Hz und 0.1 MHz, vorzugsweise zwischen 10 Hz und 10.000 Hz, noch bevorzugter zwischen 25 Hz und 5000 Hz, am bevorzugtesten zwischen 50 Hz und 2500 Hz, am allerbevorzugtesten zwischen 100 Hz und 1000 Hz.

### Koppelmedium (optional)

Zwischen den Schallquellen und der ersten Substratstapeloberfläche befindet sich während der Schallbeaufschlagung insbesondere eine Koppelmediumschicht aus einem Koppelmedium. Vorzugsweise wird das Koppelmedium über Koppelmediumkanäle eingebracht. Das Koppelmedium bedeckt die Schallquellen und die zu beaufschlagende Substratstapeloberfläche zumindest überwiegend, vorzugsweise vollständig. Bei dem Koppelmedium kann es sich insbesondere um eines oder mehrere der folgenden Medien handeln:
- Festkörper und/oder
- Fluide, insbesondere
   ∘ Gase, vorzugsweise
      **▪** Reine Gase oder
      **▪** Gasgemische, vorzugsweise Luft
   ∘ Flüssigkeiten, insbesondere
      **▪** Reine Flüssigkeiten oder
      **▪** Flüssigkeitsgemische
   ∘ Aerosole und/oder
   ∘ Suspensionen

Als Koppelmedium wird bevorzugt Wasser, insbesondere destilliertes Wasser, verwendet.

Die Dicke der Koppelmediumschicht ist erfindungsgemäß insbesondere kleiner als 5 mm, vorzugsweise kleiner als 1 mm, noch bevorzugter kleiner als 1 µ, am bevorzugtesten kleiner als 1 nm.

Die Dicke der Koppelmediumschicht ist erfindungsgemäß insbesondere mindestens so groß wie die Summe der Rauheiten der Substratstapelfixieroberfläche und der Schallprobenhalteroberfläche, insbesondere der Schallquellenoberflächen, die miteinander gekoppelt werden sollen. Die Rauheit wird entweder als mittlere Rauheit, quadratische Rauheit oder als gemittelte Rauhtiefe angegeben. Die ermittelten Werte für die mittlere Rauheit, die quadratische Rauheit und die gemittelte Rauhtiefe unterscheiden sich im Allgemeinen für dieselbe Messstrecke bzw. Messfläche, liegen aber im gleichen Größenordnungsbereich. Die Dicke der Koppelmediumschicht ist daher mindestens genau so groß, insbesondere mindestens 2 mal so groß, noch bevorzugter mindestens 3 mal so groß, noch bevorzugter mindestens 5 mal so groß, am bevorzugtesten mindestens 10 mal so groß wie die Summe der Rauheiten der Substratstapelfixieroberfläche und der Schallprobenhalteroberfläche, insbesondere der Schallquellenoberflächen.

Alternativ wird die Dicke der Koppelmediumschicht insbesondere so gewählt, dass eine Berührung der Substratstapelfixieroberfläche und der Schallprobenhalteroberfläche zumindest überwiegend, vorzugsweise vollständig, vermieden wird.

In ganz besonders bevorzugten Ausführungsformen kann auf die Verwendung einer Koppelmediumschicht gänzlich verzichtet werden. Das ist vorzugsweise dann der Fall, wenn die Übertragung der Schallwellen von den Schallquellen und der ersten Substratstapeloberfläche ohne nennenswerte Einschränkungen, insbesondere Intensitätsverlust oder Streuung, erfolgt. Insbesondere wird die Fixierung des Substrats bzw. Substratstapels so gut sein, dass der Kontakt zwischen der Schallquelle und der ersten Substratstapeloberfläche maximiert wird. Das ist insbesondere bei Vakuumfixierungen und glatten Oberflächen mit geringer Rauhigkeit der Fall.

### Optisches System

Das optische System besteht erfindungsgemäß mindestens aus einer, insbesondere einzigen, Quelle für die elektromagnetische Strahlung, Mitteln zur Beaufschlagung einer Substratstapelmessoberfläche des Substratstapels, Interferenzmitteln zur Bildung einer Interferenzstrahlung aus dem ersten und zweiten Strahlungsgang und einem Detektor zur Erfassung der Interferenzstrahlung.

Ein Primärstrahl verlässt als Quellenstrahl die Quelle für elektromagnetische Strahlung. Als Sekundärstrahl wird der von der Substratstapelmessoberfläche reflektierte, insbesondere durch die erfindungsgemäße Schwingung des Substratstapels veränderte, Strahl bezeichnet. Der Primärstrahl wird insbesondere durch einen Strahlteiler in einen ersten Strahlengang und einen zweiten Strahlengang geteilt. Alternativ können die zwei Strahlengänge separat ausgegeben werden, insbesondere durch zwei, vorzugsweise synchron geschaltete, Quellen. Der erste Strahlengang wird als Messstrahl auf die Substratstapelmessoberfläche gelenkt/gerichtet und nach Reflexion als Sekundärstrahl zu dem Detektor geleitet. Vor dem Auftreffen auf den Detektor wird der Sekundärstrahl mit dem zweiten Strahlengang/Referenzstrahl vereint. Dabei kommt es bevorzugt zur Interferenz des Primär- und des Sekundärstrahls.

Das optische System kann durch beliebige andere optische Elemente erweitert werden, die für die Beeinflussung, insbesondere Umlenkung, Teilung, Parallelisierung, des Primär- und/oder Sekundärstrahls beziehungsweise des ersten und/oder zweiten Strahlengangs verwendet werden können. Dazu zählen vor allem eines oder mehrere oder eine Kombination eines oder mehrerer der folgenden optischen Elemente:
- Phasenschiebermasken,
- Mikrospiegelarrays (DMDs),
- Prismen,
- Linsen, insbesondere
   ∘ Refraktionslinsen
      **▪** Geometrische Linsen, insbesondere
      • Konvexlinsen,
      • Konkavlinsen,
      • Konvex-Konkavlinsen,
   ∘ Diffraktionslinsen, insbesondere Fresnellinsen
- Spiegel, insbesondere
   ∘ Kaltspiegel,
   ∘ Parabolspiegel,
   ∘ Elliptische Spiegel,
- Kollimatoren.
- Strahlteiler

Erfindungsgemäß bevorzugt verwendet werden folgende optischen Elemente:
- Linsen
- StrahlteilerSpiegel

Insbesondere werden Linsen verwendet, um den Durchmesser des Primärstrahls zu verbreitern. Besonders vorteilhaft ist es, wenn dieselben Linsen nach dem Reflektieren des Primärstrahls zur Verkleinerung des Durchmessers des Sekundärstrahls verwendet werden.

Refraktions- und/oder Fresnellinsen werden erfindungsgemäß insbesondere zur Strahlverbreiterung und/oder Strahlkomprimierung verwendet.

Spiegel werden vorzugsweise als Teil des Interferometers verwendet, um Strahlen über mehr oder weniger lange Wege zur Interferenz zu bringen. Kaltspiegel können insbesondere verwendet werden, um Infrarotstrahlung zu filtern, damit diese den Substratstapel nicht unnötig aufheizt.

Kollimatoren werden vorzugsweise direkt nach der Quelle installiert, um eine Parallelisierung des Strahls zu gewährleisten.

### Quelle

Bei der Quelle handelt es sich um eine elektromagnetische Quelle. Die elektromagnetische Strahlung kann vollständig inkohärent oder zeitlich und/oder räumlich kohärent sein. Die Kohärenzlänge ist insbesondere größer als 1 µm, vorzugsweise größer als 100 µm, noch bevorzugter größer als 1 mm, am allerbevorzugtesten größer als 100 mm.

Die Quelle wird vorzugsweise im Pulsmodus betrieben werden. Im Pulsmodus werden Photonen nicht kontinuierlich, sondern gepulst abgegeben. Die Pulszeiten sind insbesondere kleiner als 1 s, vorzugsweise kleiner als 1 ms, noch bevorzugter kleiner als 1 µs, am allerbevorzugtesten kleiner als 1 ns.

Die Leistung der Quelle ist insbesondere größer als 1 mW, vorzugsweise größer als 100 mW, noch bevorzugter größer als 1 W, am bevorzugtesten größer als 100 W, am allerbevorzugtesten größer als 1000 W.

Die elektromagnetische Strahlung, die von der Quelle emittiert wird, besitzt vorzugsweise eine Wellenlänge im Bereich zwischen 10 nm und 2000 nm, mit Vorzug zwischen 10 nm und 1500 nm, mit größerem Vorzug zwischen 10 nm und 1000 nm, mit allergrößtem Vorzug zwischen 10 nm und 500 nm, mit allergrößtem Vorzug zwischen 10 nm und 400 nm. Besonders bevorzugte Wellenlängen sind 635 nm und 532 nm. Mit besonderem Vorzug werden Weißlichtquellen verwendet, die elektromagnetische Strahlung einer ganzen Bandlänge emittieren. Alle verwendeten optischen Elemente und/oder Detektoren müssen dann auf die Weißlichtquellen ausgelegt sein.

### Detektor

Der Detektor ist insbesondere als Flächendetektor ausgebildet. Vorzugsweise handelt es sich bei dem Flächendetektor um einen CCD-Detektor. Der Detektor weist insbesondere eine Auslesefrequenz zwischen 1 Hz und 1 MHz, vorzugsweise zwischen 10 Hz und 100000 Hz, noch bevorzugter zwischen 20 Hz und 10.000 Hz, am bevorzugtesten zwischen 30 Hz und 1000 Hz, am allerbevorzugtesten zwischen 40 und 100 Hz auf. Unter Auslesefrequenz versteht man hierbei die Anzahl der vollen Interferenzbilder, die der Detektor pro Sekunde auslesen kann.

Die horizontale Pixelauflösung des Detektors beträgt insbesondere mehr als 10 Pixel/cm, vorzugsweise mehr als 100 Pixel/cm, noch bevorzugter mehr als 1000 Pixel/cm, am bevorzugtesten mehr als 10000 Pixel/cm, am allerbevorzugtesten mehr als 100000 Pixel/cm.

Die vertikale Pixelauflösung des Detektors beträgt insbesondere mehr als 10 Pixel/cm, vorzugsweise mehr als 100 Pixel/cm, noch bevorzugter mehr als 1000 Pixel/cm, am bevorzugtesten mehr als 10000 Pixel/cm, am allerbevorzugtesten mehr als 100000 Pixel/cm.

Der Abstand zwischen zwei Pixeln liegt insbesondere zwischen 0.1 µm und 100 µm, vorzugsweise zwischen 0.5 µm und 50 µm, noch bevorzugter zwischen 1 µm und 25 µm, am bevorzugtesten zwischen 2.5 µm und 10 µm, am allerbevorzugtesten bei 5 µm.

### Bevorzugte Ausführungsformen

Bei allen erfindungsgemäßen Ausführungsformen besteht insbesondere die Möglichkeit, eine Relativbewegung zwischen dem optischen System und dem Schallbeaufschlagungsmittel und/oder dem Schallprobenhalter durchzuführen. Da das optische System aus mehreren Teilen bzw. optischen Elementen besteht, ist eine aktive Bewegung des Schallprobenhalters bevorzugt.

Der Schallprobenhalter wird vorzugsweise auf einer massiven Platte bewegt, insbesondere einer Granitplatte. Die massive Platte dient der Schwingungsdämpfung. Das optische System wird insbesondere relativ zur oder an derselben massiven Platte fixiert. In einer noch bevorzugteren erfindungsgemäßen Ausführungsform ist das optische System in Bezug zu einer zweiten massiven Platte fixiert, die mechanisch von der ersten massiven Platte weitestgehend, insbesondere vollständig, entkoppelt ist. Dadurch werden Schwingungen, die durch den sich auf der ersten massiven Platte bewegenden Schallprobenhalter entstehen, optimal abgeschirmt.

In einer ersten erfindungsgemäßen Ausführungsform besteht die erfindungsgemäße Anlage mindestens aus einer, insbesondere kohärenten, elektromagnetischen Quelle, einer Referenz, einem Strahlteiler, einem Detektor, optischen Elementen zur Verbreiterung und Aufteilung der Strahlen und einem erfindungsgemäßen Schallprobenhalter.

Der Schallprobenhalter wird in dieser ersten erfindungsgemäßen Ausführungsform fixiert. Durch die Fixierung ist eine besonders starre Ausführungsform ohne durch eine Bewegung des Schallprobenhalters eventuell hervorgerufene Schwingung möglich.

In einer zweiten erfindungsgemäßen Ausführungsform besteht die erfindungsgemäße Anlage mindestens aus einer, insbesondere kohärenten, elektromagnetischen Quelle, einer Referenz, einem Strahlteiler, einem Detektor, optischen Elementen zur Verbreiterung und Aufteilung der Strahlen und einem beweglichen Schallprobenhalter.

Der Schallprobenhalter kann bei der zweiten erfindungsgemäßen Ausführungsform eine Relativbewegung zum optischen System durchführen. Durch die Möglichkeit der Bewegung des Schallprobenhalters über eine, insbesondere massive, Platte, wird ein Scannen der Teilbereiche zwischen den Teilstrahlen, die vom Linsenfeld erzeugt werden, ermöglicht.

### Prozesse

In einer ersten Ausführungsform des erfindungsgemäßen Prozesses erfolgt die Erfassung/Vermessung des Substratstapels wie folgt, wobei die einzelnen Prozessschritte als eigenständige Schritte der Erfindung offenbart werden.

In einem ersten Prozessschritt wird ein Substratstapel auf den Schallprobenhalter geladen. Das Laden erfolgt vorzugsweise voll- oder semiautomatisch mit einem Roboter oder manuell. Verfügt der Schallprobenhalter über bevorzugt vorhandene Ladestifte, wird der Substratstapel auf den Ladestiften abgelegt und durch Senken der Ladestifte auf die Fixieroberfläche des Grundkörpers abgesenkt. Verfügt der Schallprobehalter über keine Ladestifte, wird der Substratstapel direkt auf der Fixieroberfläche abgelegt.

In einem optionalen zweiten Prozessschritt erfolgt eine Fixierung des Substratstapels mittels Fixiermitteln. Zur Fixierung werden vorzugsweise Vakuumzugänge verwendet, die insbesondere in dem Schallprobenhalter integral eingearbeitet sind. Durch die Vakuumzugänge erfolgt eine relativ einfache, insbesondere an der Unterseite des Substratstapels durchgeführte, Fixierung. Die Fixierung erfolgt dabei insbesondere punktuell, sodass noch ein Koppelmedium zwischen den Schallprobenhalter und dem Substratstapel eingebracht werden kann. In einer ganz besonders bevorzugten Ausführungsform sind die Substratstapelfixieroberfläche und die Fixierfläche des Schallprobenhalters so plan, dass auf ein Koppelmedium zur effizienten Schallübertragung gänzlich verzichtet werden kann.

In einem weiteren, optionalen dritten Prozessschritt wird das Koppelmedium zwischen den Substratstapel und die Schallquellen, insbesondere in einen durch die Form des Schallprobenhalters ausgebildeten Raum, eingebracht. Das Koppelmedium wird vorzugsweise durch, insbesondere in dem Schallprobenhalter integral ausgebildete, Koppelmediumkanäle eingebracht. Denkbar ist auch die Einbringung des Koppelmediums über ein eigenes, externes Zubringmittel wie beispielsweise einen Schlauch, eine Spritze oder eine Düse.

Der zweite und der dritte Prozessschritt können in der Reihenfolge vertauscht oder zumindest teilweise gleichzeitig durchgeführt werden. Insbesondere kann es vorteilhaft sein, das Koppelmedium zuerst auf die Fixieroberfläche aufzubringen, danach den Substratstapel abzulegen und erst dann die Fixierung, falls erwünscht und/oder notwendig, durchzuführen.

In einem vierten Prozessschritt wird ein von den Schallquellen erzeugtes Schallquellenmuster oder eine Sequenz von unterschiedlichen Schallquellenmustern, insbesondere durch das Koppelmedium hindurch, in den Substratstapel eingekoppelt. Das Schallquellenmuster oder die Sequenz von Schallquellenmustern wird vorzugsweise in einer Soft- und/oder Hard- und/oder Firmware vorprogrammiert. In einer ganz besonders bevorzugten erfindungsgemäßen Ausführungsform ist eine Software vorgesehen, die eine beliebige Programmierung der Schallquellen und damit eines oder mehrerer Schalquellenmuster erlaubt. Die Software sollte benutzerfreundlich sein, über ein entsprechendes graphische Benutzeroberfläche verfügen und eine möglichst einfache Programmierung, insbesondere durch graphische Elemente, des Schallprobenhalters erlauben. Insbesondere soll für jede Schallquelle einzeln angegeben werden können, zu welchem Zeitpunkt sie ein Schallsignal abgibt und mit welcher Stärke dieses Schallsignal abgegeben wird. In einer bevorzugten Ausführungsform können verschiedene Schallquellenmuster generiert und gespeichert werden. Die Software steuert zu einem oder mehreren definierten Triggerzeitpunkt(en) die einzelnen Schallquellen des Schallprobenhalters an und erzeugt somit mehrere Schallsignale. Die so erzeugten Schallsignale vereinen/überlagern sich zu einer, insbesondere inhomogenen, Schallfront.

Die Schallfront wird in einem fünften Prozessschritt, insbesondere über das Koppelmedium, in den Substratstapel eingekoppelt und breitet sich durch diesen aus. Da die Schallgeschwindigkeit in verschiedenen Materialien unterschiedlich ist und die Schallfront einen zumindest teilweise, insbesondere an Fehlstellen, inhomogenen Substratstapel durchläuft, wird die Schallwellenfront auf dem Weg bis zur Substratstapelmessoberfläche, insbesondere lokal, verändert/verformt. Die Verformung der Schallwellenfront ist gleichbedeutend mit der Aussage, dass unterschiedliche Teile der Schallwellenfront zu unterschiedlichen Zeitpunkten an der Substratstapelmessoberfläche ankommen. Sobald ein Teil der Schallwellenfront an die Substratstapelmessoberfläche trifft, regt sie die Umgebung zu einer Schwingung an. Diese Schwingung beeinflusst wiederum die elektromagnetischen Strahlen des ersten Strahlenganges, wenn dieser auf die Substratstapelmessoberfläche trifft.

In einem sechsten Prozessschritt wird die elektromagnetische Strahlung, insbesondere zeitgleich zur Erzeugung bzw. Einkoppelung der Schallwellenfront in den Substratstapel, erzeugt bzw. von der Quelle ausgesendet. Die elektromagnetische Strahlung wird verbreitert, von einem Strahlteiler zerlegt und teilweise auf eine Referenz reflektiert (zweiter Strahlengang). Der nicht auf die Referenz reflektierte Strahl (erster Strahlengang) wird auf seinem Weg zur Substratstapelmessoberfläche verbreitert und durch ein Linsenfeld in Teilstrahlen zerlegt.

Die einzelnen Teilstrahlen werden durch den jeweiligen lokalen Schwingungszustand der Substratstapelmessoberfläche lokal unterschiedlich, insbesondere zeitlich versetzt, zum Strahlteiler zurückreflektiert. Dort kommt es zur Überlagerung/(Wieder-)vereinigung der geteilten Strahlen. Das so erzeugte Interferenzmuster wird am Detektor aufgezeichnet.

Bevorzugt werden mehrere Interferenzbilder innerhalb eines vordefinierten Zeitintervals für jedes, insbesondere sequentiell, induzierte Schallsignal aufgezeichnet. Die erfindungsgemäßen Prozessschritte vier bis sechs werden für unterschiedliche Schallsignale insbesondere mindestens einmal, vorzugsweise mindestens zweimal, noch bevorzugter mindestens viermal, wiederholt. Denkbar ist auch die Aufzeichnung mehrerer Interferenzbilder während des Abklingens eines einmal in den Substratstapel eingekoppelten Schallsignals.

In einem letzten/siebten Prozessschritt werden die gespeicherten Interferenzbilder ausgewertet, um mögliche Fehlstellen zu identifizieren.

In einem letzten achten erfindungsgemäßen Prozessschritt erfolgt die Entladung des Substratstapels.

In alle optischen Wege können unterschiedliche Filter eingebaut werden. In einer bevorzugten Ausführungsform werden Halbschattenfilter und/oder Polarisationsfilter verwendet. Des Weiteren können Filter zur vollständigen Unterbrechung- des optischen Weges eingebaut werden, um eine leichtere Abgrenzung der auszuwertenden Interferenzbilder durch sequenzielles Ein- und Ausschalten einzelner Strahlengänge zu erhalten. Es sind auch alle anderen dem Fachmann bekannten Filter, die zweckdienliche Eigenschaften erfüllen, denkbar.

Die Erfindung kann entweder als alleinstehendes Modul oder als Modul in einem Cluster verwendet werden. Wird die Erfindung als alleinstehendes Modul verwendet, so sind insbesondere eine Trennung von Herstellung bzw. Prozessierung des Substratstapels einerseits und eine Vermessung des Substratstapels andererseits durchführbar. Dadurch wird es möglich eine Prozesskette über mehrere Länder aufzubauen, in der der Substratstapel in einem Land hergestellt und in einem anderen Land vermessen wird. Ist die erfindungsgemäße Ausführungsform Teil eines Clusters, so können Herstellung des Substratstapels und dessen Vermessung am gleichen Ort durchgeführt werden. Dadurch wird es insbesondere möglich, potentielle Fehler bei der Herstellung des Substratstapels frühzeitig zu erkennen, um den Substratstapel einem Korrekturprozess zuzuführen.

Insbesondere kann ein derartiger Cluster eines oder mehrere der folgenden Module aufweisen:
- Metrologie Anlage gemäß der erfindungsgemäßen Ausführungsform
- Bonder
- Debonder, insbesondere
   ∘ Anlage zur Trennung eines Pre-Bonds, insbesondere
- WO2013091714A Beschichtungsanlage, insbesondere
   ∘ Schleuderbelackungsanlage
   ∘ Sprühbelackungsanlage
   ∘ PVD-Anlage
   ∘ CVD-Anlage
- Entwickler
- Reinigungsanlage
- Plasmaanlage
- Sputteranlage
- Ausrichtungsanlage
- Imprintanlage.

Soweit vorrichtungsgemäße Merkmale Verfahrensmerkmale implizieren oder beschreiben, sollen diese als verfahrensgemäß offenbart gelten und umgekehrt.

Weitere Vorteile, Merkmale und Ausführungsformen der vorliegenden Erfindung ergeben sich aus der nachfolgenden Figurenbeschreibung sowie den Patentansprüchen und den zugehörigen Figuren. Diese zeigen in:
- Figur 1a: eine schematische Oberansicht einer ersten Ausführungsform eines erfindungsgemäßen Schallprobenhalters,
- Figur 1b: eine schematische Querschnittsansicht der ersten Ausführungsform,
- Figur 2a: eine schematische Oberansicht einer zweiten Ausführungsform des erfindungsgemäßen Schallprobenhalters,
- Figur 2b: eine schematische Querschnittsansicht der zweiten Ausführungsform,
- Figur 3: eine schematische Seitenansicht einer Ausführungsform einer erfindungsgemäßen Anlage/Vorrichtung mit einem Vergrößerungsausschnitt,
- Figur 4: eine schematische Ansicht eines Interferenzmusters zu einem Zeitpunkt t₁,
- Figur 5: eine schematische Darstellung der zeitlichen Veränderung der Amplitude dreier unterschiedlicher Oberflächenpunkte,
- Figur 6a: eine schematische, vergrößerte Darstellung eines schwingenden Oberflächenpunktes in seinem Schwingungsmaximum,
- Figur 6b: eine schematische, vergrößerte Darstellung des schwingenden Oberflächenpunktes in seinem Schwingungsnullpunktdurchgang,
- Figur 6c: eine schematische, vergrößerte Darstellung des schwingenden Oberflächenpunktes in seinem Schwingungsminimum,
- Figur 6d: eine schematische Darstellung der Amplitudenänderung des Oberflächenpunktes und
- Figur 7: ein Flussdiagramm eines erfindungsgemäßen Prozesses.

In den Figuren sind gleiche Bauteile oder Bauteile mit der gleichen Funktion mit den gleichen Bezugszeichen gekennzeichnet.

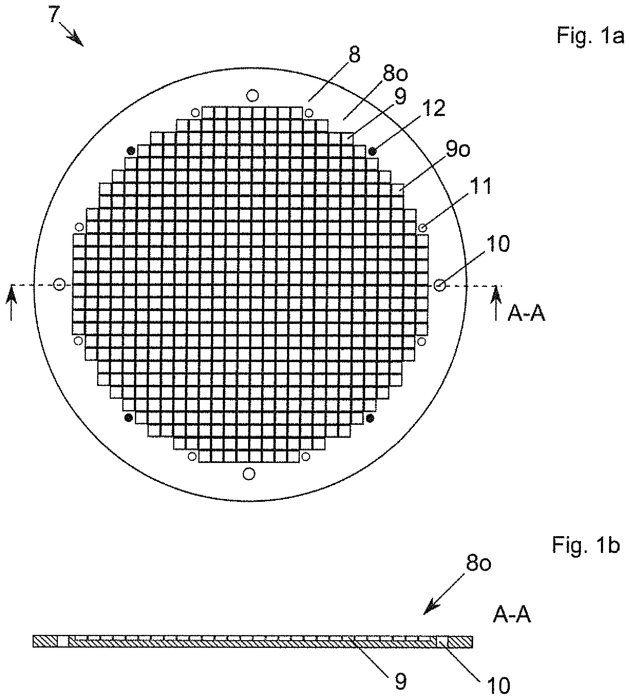

Die Figur 1a zeigt eine schematische Oberansicht einer ersten erfindungsgemäßen Ausführungsform eines Schallprobenhalters 7 (Schallbeaufschlagungsmittel), bestehend aus mehreren einzelnen, insbesondere rasterförmig angeordneten, Schallquellen 9. Ein Grundkörper 8 des Schallprobenhalters 7 besitzt eine vollkommen flache (also bis zum Seitenrand ebene) Grundkörperoberfläche 8o. Im Grundkörper 8 befinden sich vorzugsweise, mehrere, den Grundkörper 8 insbesondere durchsetzende, Koppelmediumkanäle 10 und/oder Fixiermittel 11 und/oder Ladestifte 12.

Denkbar wäre eine beliebige Verteilung der Koppelmediumkanäle 10 und/oder Fixiermittel 11 und/oder Ladestifte 12 über die Grundkörperoberfläche 8o, also auch zwischen den Schallquellen 9. Vorzugsweise werden die Koppelmediumkanäle 10 und/oder Fixiermittel 11 und/oder Ladestifte 12 allerdings peripher angebracht, um ein nahtloses/ununterbrochenes Feld an Schallquellen 9 zu erhalten.

Die Figur 1b zeigt, dass Schallquellenoberflächen 9o der Schallquellen 9 bevorzugt fluchtend mit der Grundkörperoberfläche 8o angeordnet sind, insbesondere in die Grundkörperoberfläche 8o eingearbeitet und mit dieser integral ausgebildet.

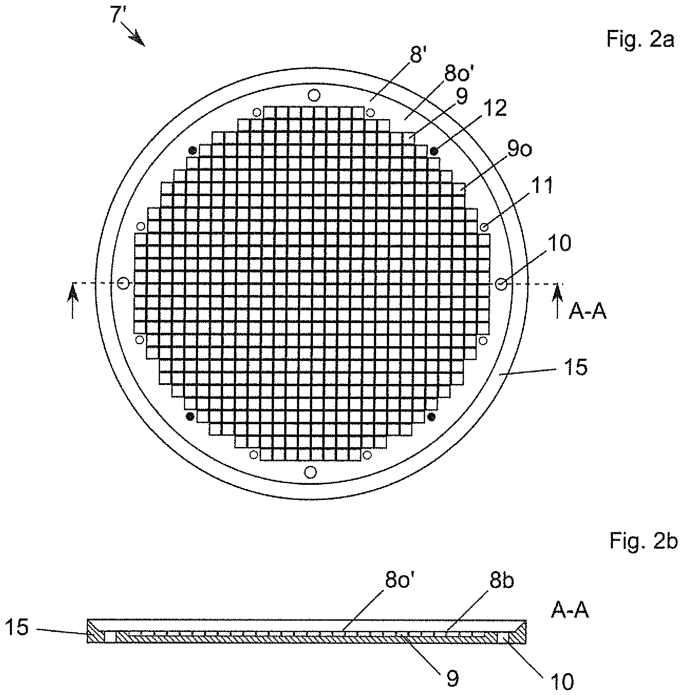

Die Figur 2a zeigt eine schematische Oberansicht einer zweiten, bevorzugten erfindungsgemäßen Ausführungsform eines Schallprobenhalters 7', bestehend aus mehreren einzelnen, insbesondere rasterförmig angeordneten, Schallquellen 9. Ein Grundkörper 8' besitzt eine Grundkörperoberfläche 8o', die einen Boden 8b und einen den Boden 8b seitlich, insbesondere vollständig umlaufend, umfassenden Steg 15 aufweist. Der Grundkörper 8' bildet somit insbesondere einen Raum zur Aufnahme eines Koppelmediums 13 aus. Das Koppelmedium 13 ist über die Koppelmediumkanäle 10 zuführbar, insbesondere gesteuert von der Steuerungseinrichtung.

Im Grundkörper 8' befinden sich vorzugsweise, mehrere Koppelmediumkanäle 10 und/oder Fixiermittel 11 und/oder Ladestifte 12. Denkbar wäre eine beliebige Verteilung der Koppelmediumkanäle 10 und/oder Fixiermittel 11 und/oder Ladestifte 12. über die Grundkörperoberfläche 8o', also auch zwischen den Schallquellen 9. Vorzugsweise werden die Koppelmediumkanäle 10 und/oder Fixiermittel 11 und/oder Ladestifte 12 allerdings peripher angebracht, um ein nahtloses Feld an Schallquellen 9 zu erhalten. Vorzugsweise werden die Koppelmediumkanäle 10 und/oder Fixiermittel 11 und/oder Ladestifte 12 zwischen dem Steg 15 und den Schallquellen 9 angeordnet.

Die Aufgabe des Steges 15 besteht darin, ein, insbesondere flüssiges, Koppelmedium, das über die Koppelmediumkanäle 10 eingebracht wird, auf der Grundkörperoberfläche 8o' zu halten.

Die Figur 2b zeigt, dass die Schallquellenoberflächen 9o der Schallquellen 9 bevorzugt fluchtend mit der Grundkörperoberfläche 8o' und/oder fluchtend mit dem Boden 8b angeordnet sind, insbesondere in die Grundkörperoberfläche 8o' eingearbeitet und mit dieser integral ausgebildet.

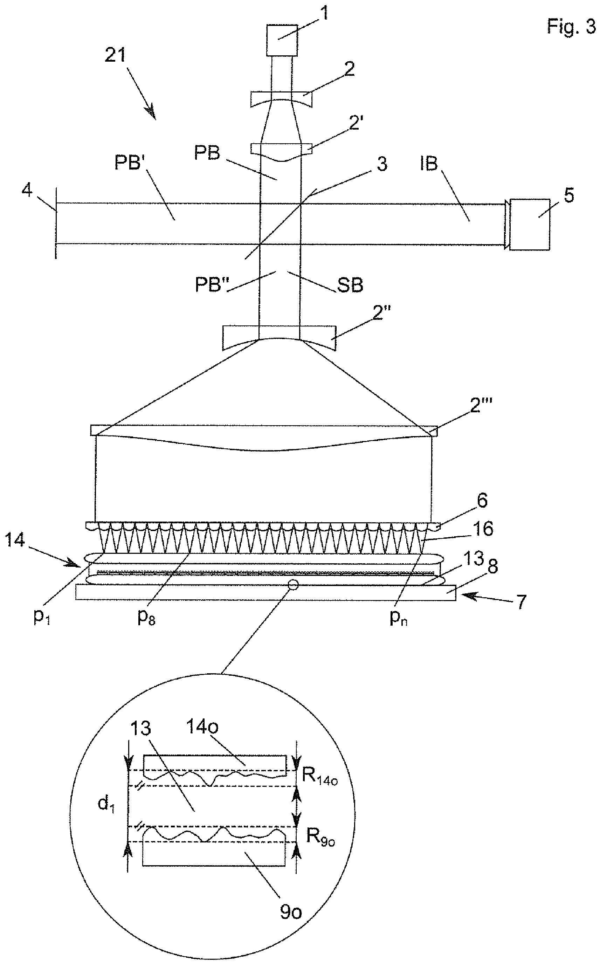

Die Figur 3 zeigt eine Ausführungsform einer erfindungsgemäßen Anlage 21 (Vorrichtung). Die Anlage weist eine, insbesondere kohärente, Quelle 1 auf. Die Quelle 1 ist zur Ausgabe einer elektromagnetischen Strahlung ausgebildet, wobei die Ausgabe durch eine Steuerungseinrichtung (nicht dargestellt) gesteuert wird. Die Anlage 1 ist so ausgebildet, dass die elektromagnetische Strahlung teilweise auf eine Substratstapelmessoberfläche 14m des Substratstapels 14 gelenkt wird. Der Substratstapel 14 ist hierzu insbesondere an einer der Substratstapelmessoberfläche 14m gegenüberliegenden Substratstapelfixieroberfläche 14o auf dem Schallprobenhalter 7 angeordnet und fixiert.

Die elektromagnetische Strahlung soll als Primärstrahl PB zu einem, insbesondere halbdurchlässigen, Strahlteiler 3 zum Teilen des Primärstrahls PB in einen ersten Strahlengang und einen zweiten Strahlengang geführt werden. Hierzu ist es von Vorteil, wenn der Primärstrahl PB für die Teilung optimiert wird. Zwischen der Quelle 1 und dem Strahlteiler 3 befinden sich vorzugsweise mehrere optische Elemente, die den Primärstrahls PB der Quelle 1 parallelisieren und/oder erweitern (Durchmesser vergrößern). Dazu zählen insbesondere Kollimatoren (nicht dargestellt) und/oder sowie Linsen 2, 2'.

Der möglichst parallelisierte Primärstrahl PB trifft dann auf den Strahlteiler 3, der ihn in zwei Teilstrahlen, nämlich einen reflektierten und, insbesondere um 90°, umgelenkten Referenzstrahl PB' (zweiter Strahlengang) und einen transmittierten Messstrahl PB" (erster Strahlengang) zerlegt/aufteilt.

Die Anlage 21 besitzt mindestens eine Referenz 4. Bei der Referenz 4 handelt es sich vorzugsweise um einen ebenen Spiegel. Die Aufgabe der Referenz 4 besteht darin, den (parallelen) Referenzstrahl PB' auf den Strahlteiler 4, insbesondere zumindest überwiegend, vorzugsweise vollständig, zurück zu reflektieren. Der zurückreflektierte Referenzstrahl PB' trifft erneut auf den Strahlteiler 4, wobei dieser wiederum in einen transmittierten Teilstrahl und einen abgelenkten Teilstrahl. In einer besonderen erfindungsgemäßen Ausführungsform kann sich die Referenz 4 im Strahlengang des Messstrahls PB" befinden. Derartige Interferometer werden als "distal integrated interferometer" bezeichnet.

Der durch den Strahlteiler 3 transmittierte Messstrahl PB" wird vorzugsweise durch mehrere optische Elemente erneut verbreitert, insbesondere auf die Größe des zu vermessenden Substratstapels 14. Zwischen den dafür verwendeten optischen Elementen, insbesondere Linsen 2''', und dem Substratstapel 14, befindet sich vorzugsweise ein Linsenfeld 6. Das Linsenfeld 6 fokussiert Teile des Messstrahls PB" auf die dem Linsenfeld zugewandte, insbesondere parallel zu dem Linsenfeld 6 angeordnete, Substratstapelmessoberfläche 14m. Jede Linse des Linsenfelds 6 erzeugt somit einen Teilstrahl 16, der einen Messpunkt an der Substratstapelmessoberfläche 14m erfasst.

Die von der Substratstapelmessoberfläche 14m reflektierte Strahlung gelangt als durch die Eigenschaften, insbesondere Form, und beeinflusst von den Schallwellen des Schallprobenhalters veränderter Sekundärstrahl SB zurück zum Strahlteiler 3. An diesem wird der Referenzstrahl PB' und der Sekundärstrahl SB zur Interferenz gebracht. Die Anlage 1 ist also so konstruiert, dass die Laufzeiten des ersten und zweiten Strahlengangs übereinstimmen, so dass diese zur gleichen Zeit wieder zu dem Strahlteiler 3 zurückkommen.

Ein Detektor 5 zeichnet die Interferenzbilder in einer auswertbaren, insbesondere digitalisierten, Form auf. Vorzugsweise ist der Detektor 5 als Flächendetektor, noch bevorzugter als CCD-Flächendetektor ausgebildet.

In der Figur 3 ist eine Vergrößerung der Schnittstelle zwischen der Substratstapelfixieroberfläche 14o und den, insbesondere fluchtend verlaufenden beziehungsweise eine Schallquellenebene ausbildenden, Schallquellenoberflächen 9o. Die Schallquellenoberflächen 9o entspricht der Fixieroberfläche 8o (bzw. bei Verwendung des Schallprobenhalters 7' gemäß Figur 2 der Fixieroberfläche 8o') ersetzt werden.

Die Rauheiten R₁₄ₒ und R₉ₒ müssen in Summe kleiner sein, als der Abstand d1, damit das Koppelmedium die Substratstapelfixieroberfläche 14o optimal und vor allem vollständig mit der Schallquellenoberfläche 9o koppeln kann. Der Abstand d1 ist die Strecke zwischen der tiefsten Position der Schallquellenoberflächen 9o und der tiefsten Position der Substratstapelfixieroberfläche 14o.

Alternativ wird die Dicke der Koppelmediumschicht insbesondere so gewählt, dass eine Berührung der Substratstapelfixieroberfläche und der Schallprobenhalteroberfläche zumindest überwiegend, vorzugsweise vollständig, vermieden wird.

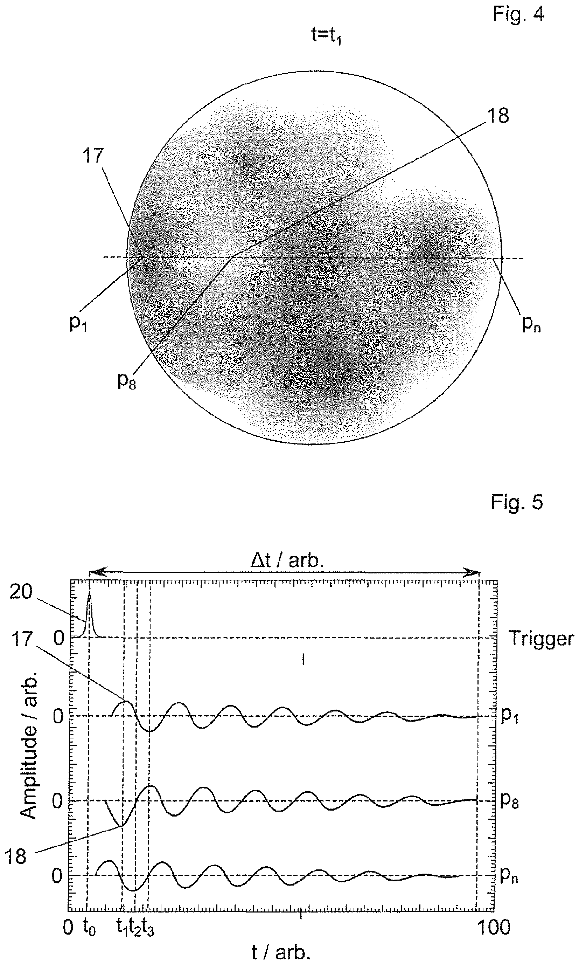

Die Figur 4 zeigt ein schematisches, am Detektor 5 aufgenommenes Interferenzbild zu einem Zeitpunkt t1. Erkennbar sind Maxima 17 und Minima 18. Zum Zeitpunkt t1 durchläuft der Punkt p1 an der Substratstapelmessoberfläche 14m gerade das Maximum 17, während der Punkt p8 zur selben Zeit das Minimum 18 durchläuft. Der Punkt Pn durchläuft den Nulldurchgang. Der Kontrast zwischen Minimum und Nulldurchgang ist schwer darzustellen und nicht leicht erkennbar.

Es werden mehrere derartige Interferenzbilder für jedes induzierte Schallsignal über ein Zeitinterval Δt aufgenommen. Die Anzahl der aufgenommenen Interferenzbilder pro Zeitinterval Δt wird als Samplingrate bezeichnet. Die Samplingrate ist insbesondere gleich 1, vorzugsweise größer als 5, noch bevorzugter größer als 10, am bevorzugtesten größer als 20, am allerbevorzugtesten größer als 100.

Die Figur 5 zeigt ein Diagramm mit vier unterschiedlichen Kurven. Die Abszisse ist zeitskaliert. Die Größenordnung der Zeitskala liegt insbesondere im Millisekundenbereich, vorzugsweise im Mikrosekundenbereich, am bevorzugtesten im Nanosekundenbereich. Die erste Kurve ist die Triggerkurve. Die Triggerkurve besteht aus einem Triggersignal 20, das den Zeitpunkt t0 angibt, an dem der Schallprobenhalter Schallwellen 19 der Schallquellen 9 über das Koppelmedium 13 in den Substratstapel 14 einkoppelt. Es ist gleichzeitig auch der Beginn des Zeitintervals Δt.

Die drei anderen Kurven stellen die gemessenen Amplitudenverläufe an den drei Punkten p1, p8 und pn der Substratstapelmessoberfläche 14m dar. Man erkennt, dass die Amplituden der einzelnen Punkte zu einem Zeitpunkt t1 in Betrag und Vorzeichen unterschiedlich sein können. Die Schwingung unterscheidet sich daher in Amplitude und Phase von Punkt zu Punkt.

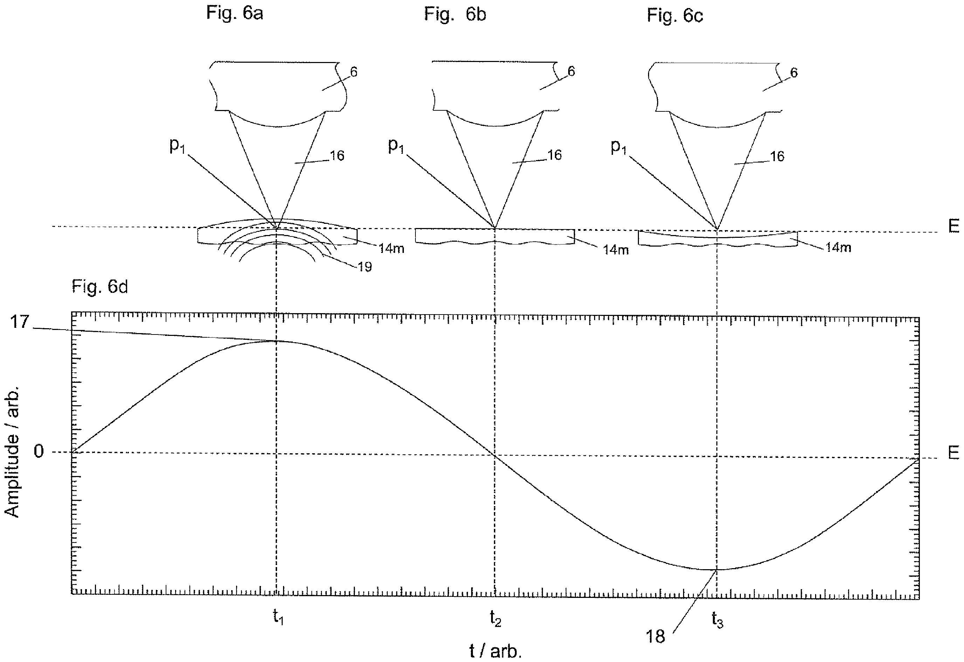

Die Figuren 6a-d zeigen den zeitlichen Verlauf am Beispiel des Punktes p1 der schwingenden Substratstapelmessoberfläche 14m in den drei Zuständen des Amplitudenmaximums, des Amplitudennulldurchgangs und des Amplitudenminimums. In der Figur 6a ist die Schallwelle 19 schematisch dargestellt, die als Teil der Schallwellenfront an die Substratstapelmessoberfläche 14m gelangt.

In den Figuren 6b-c erkennt man dann zwei weitere Zustände eines vollen Schwingungsdurchlaufs. Der Amplitudenverlauf der Figuren 6a-c wird in der Figur 6d dargestellt.

Die Figur 6a zeigt eine schematische, vergrößerte Ansicht eines zu vermessenden Punktes an der Substratstapelmessoberfläche 14m in einem Zustand, bei dem die von der Substratstapelfixieroberfläche 14o ankommende Schallwelle 19 eine lokale, konvexe Verformung/Dehnung der Substratstapelmessoberfläche 14m verursacht. Durch diese Dehnung treffen die Photonen des Teilstrahls 16 früher auf die Substratstapelmessoberfläche 14m als in den weiter unten genannten Fällen gemäß den Figuren 6b und Figur 6c. Durch die vorzeitige Rückstreuung erreichen diese Photonen den Strahlteiler 3 früher und interferieren entsprechend mit dem reflektierten Referenzstrahl PB' (zweiter Strahlengang).

Die Figur 6b zeigt eine schematische, vergrößerte Ansicht eines zu vermessenden Punktes an der Substratstapelmessoberfläche 14m in einem Zustand, bei dem die lokale Substratstapelmessoberfläche 14m nicht gedehnt wurde.

Die Figur 6c zeigt eine schematische, vergrößerte Ansicht eines zu vermessenden Punktes an der Substratstapelmessoberfläche 14m in einem Zustand, bei dem die von der Substratstapelfixieroberfläche 14o ankommende Schallwelle 19 eine lokale, konkave Verformung/Dehnung der Substratstapelmessoberfläche 14m hervorruft. Durch diese Dehnung treffen die Photonen des Teilstrahls 16 später auf die Substratstapelmessoberfläche 14m als in den bereits angeführten Fällen gemäß den Figuren 6a und Figur 6b. Durch die verzögerte Rückstreuung erreichen diese Photonen den Strahlteiler 3 später und interferieren entsprechend mit dem reflektierten Referenzstrahl PB' (zweiter Strahlengang).

Die Figur 6d zeigt eine volle Amplitudenschwingung am Punkt p1 der Substratstapelmessoberfläche 14m.

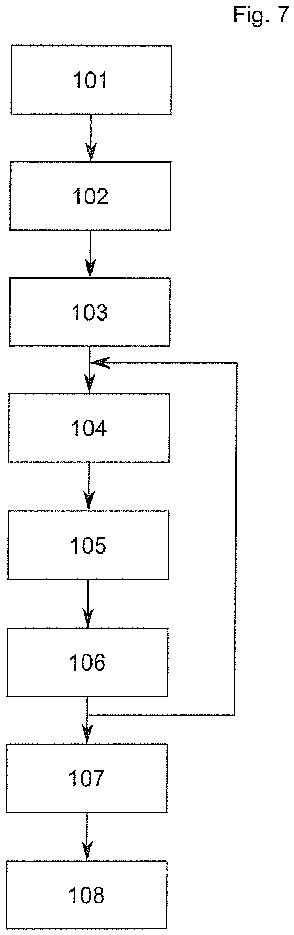

Die Figur 7 zeigt ein Flussdiagramm eines erfindungsgemäßen Prozesses. In einem ersten erfindungsgemäßen Prozessschritt 101 wird der Substratstapel 14 auf den Schallprobenhalter 7, 7' geladen. Bei vorhandenen Ladestiften 12 erfolgt das Laden vorzugsweise durch Ablegen des Substratstapels 14 auf den ausgefahrenen Ladestiften 12. Der Substratstapel 14 kann manuell oder automatisch, insbesondere durch einen Roboter, geladen werden.

In einem optionalen, zweiten erfindungsgemäßen Prozessschritt 102 wird der Substratstapel 14 am Schallprobenhalter 7, 7' fixiert. Die Fixierung erfolgt mit den dafür vorgesehenen Fixiermitteln 11.

In einem weiteren, dritten erfindungsgemäßen Prozessschritt 103 wird das Koppelmedium 13, insbesondere über die Koppelmediumkanäle 10, auf die Fixierfläche 8o, 8o' des Grundkörpers 8, 8' aufgebracht. Dabei dringt das Koppelmedium 13 in die Grenzfläche zwischen der Substratstapelfixieroberfläche 14o und der Fixierfläche 8o, 8o' ein und erzeugt somit eine Grenzschicht, die als akustischer Kontakt zwischen dem Schallprobenhalter 7, 7' und dem Substratstapel 14 dient.

In einem vierten erfindungsgemäßen Prozessschritt 104 wird ein Schallquellenmuster in dem erfindungsgemäßen Schallprobenhalter 7, 7' erzeugt. Die Erzeugung erfolgt insbesondere durch die Einzelansteuerung der Schallquellen 9. Die Schallquellen 9 werden durch eine Hard- und/oder Soft- und/oder Firmware angesteuert und emittieren einzelne Schallquellen mit einer definierten Amplitude und Phase. Durch die Überlagerung der einzelnen Schallquellensignale ergibt sich eine erfindungsgemäße Schallwellenfront, die in den Substratstapel 14 eindringt.

In einem fünften erfindungsgemäßen Prozessschritt 105 durchläuft die Schallwellenfront den Substratstapel 14 und wird dabei durch die im Substratstapel 14 auftretenden Inhomogenitäten verändert. Die Schallgeschwindigkeit ist vor allem abhängig von dem Material, das der Schall durchläuft. Durch die verschiedenen Materialien, insbesondere auch durch Fehlstellen (engl.: voids) wird die Schallwellenfront auf Ihrem Weg zur Substratstapelmessoberfläche 14m, gegebenenfalls mehrfach, verändert. Sobald die Schallwellenfront an der Substratstapelmessoberfläche 14m ankommt, regt die Schallwellenfront diese zu Schwingungen an. Die Schwingungen sind durch die inhomogene Schallwellenfront, lokal unterschiedlich. Durch die erfindungsgemäße Ausführung ist es insbesondere möglich, Substrate bzw. Substratstapel zu vermessen, die für elektromagnetische Strahlung intransparent sind. Infrarotstrahlung wird bevorzugt verwendet, um Siliziumsubstrate zu durchleuchten, sie durchdringt allerdings keine Metalle. Durch die Verwendung von Schallwellen können alle Arten von Materialien problemlos durchstrahlt werden, insbesondere Metalle, Keramiken, Polymere, Gläser, Halbleiter etc.

In einem sechsten erfindungsgemäßen Prozessschritt 106 erfolgt die Vermessung der Substratstapelmessoberfläche 14m mittels Interferenz. Die Emission der elektromagnetischen Strahlung kann insbesondere mit der Aktivierung der Schallquellen 9 getriggert werden. Da sich Licht um ein Vielfaches schneller ausbreitet als der Schall, ist gewährleistet, dass sich die elektromagnetische Strahlung an der Substratstapelmessoberfläche 14m befindet, bevor die an der Substratstapelfixieroberfläche 14o eingetretenen Schallwellen dort ankommen. Der fünfte Prozessschritt wird daher insbesondere simultan oder nur wenig zeitverzögert zum vierten Prozessschritt gesteuert.

Die elektromagnetische Strahlung wird in der Quelle 1 erzeugt. Mehrere optische Elemente, insbesondere zwei Optiken 2 und 2', erzeugen einen verbreiterten Primärstrahl PB (engl.: primary beam). Der verbreiterte Primärstrahl PB trifft auf einen Strahlteiler 3 und wird in einen reflektierten Referenzstrahl PB' (zweiter Strahlengang) und einen transmittierten Messstrahl PB" (erster Strahlengang) zerlegt. Der reflektierte Referenzstrahl PB' wird wiederum von der Referenz 4, insbesondere einem Spiegel, zum Strahlteiler 3 zurückreflektiert, wo er mit dem Sekundärstrahl SB interferiert.

Der transmittierte Messstrahl PB" wird durch weitere optische Elemente, insbesondere zwei Optiken 2" und 2''', erneut verbreitert, insbesondere auf die Größe des zu vermessenden Substrats. Nach der erneuten Verbreiterung wird der transmittierte Messstrahl PB" über ein Linsenfeld 6 in die auf die Substratstapelmessoberfläche 14m fokussierten Teilstrahlen 16 zerlegt. Die Teilstrahlen 16 werden abhängig von der Topographie der Substratstapelmessoberfläche 14m zu unterschiedlichen Zeiten reflektiert und gelangen daher mit unterschiedlichen Zeitdifferenzen zurück zum Strahlteiler 3.

Nach der Reflexion erfolgt also die Rückkehr des die Schwingungsinformation tragenden Sekundärstrahls SB zum Strahlteiler 3. Dort interferiert der Sekundärstrahl SB mit dem von der Referenz 4 reflektierten Referenzstrahl PB' zum Interferenzstrahl IB. Der Interferenzstrahl IB wird von dem Detektor 5 detektiert. Am Detektor 5 ergibt sich ein Interferenzmuster. Das am Detektor 5 aufgenommene Interferenzmuster stellt die Topographie der Substratstapelmessoberfläche 14m, insbesondere codiert als Phasenkarte, zu einem definierten Zeitpunkt t dar.

Gedämpfte Schwingungen kommen nach einem endlichen Zeitintervall Δt in einen Zustand, bei dem die Amplitude so gering ist, dass man vom Ende der Schwingung sprechen kann. Erfindungsgemäß werden für jedes induzierte Schallmuster alle Interferenzmuster für ein vorgegebenes Zeitintervall Δt gemessen.

Durch diesen erfindungsgemäßen Messvorgang stehen die Informationen für die Schwingung der Topographie der Substratstapelmessoberfläche 14m zur Verfügung, die mit einem induzierten Schallmuster erzeugt werden können.

Die erfindungsgemäßen Prozessschritte 104 bis 106 werden mehrere Male wiederholt, insbesondere mit unterschiedlichen Schallmustern. Die Abfolge von gemessenen Interferenzmustern innerhalb eines Zeitintervalls Δt wird eindeutig seinem erzeugenden Schallmuster zugeordnet.

In einem siebten erfindungsgemäßen Prozessschritt 107 werden die Schallmuster und die Interferenzbilder verwendet, um den Aufbau des Substratstapels 14 zu berechnen.

In einem achten erfindungsgemäßen Prozessschritt 108 erfolgt die Entladung des Substratstapels 14.

Die Prozessschritte 107 und 108 können auch parallel oder miteinander vertauscht stattfinden.

### Bezugszeichen

- 1: Quelle
- 2, 2', 2", 2''': Linsen
- 3: Strahlteiler
- 4: Referenz
- 5: Detektor
- 6: Linsenfeld
- 7, 7': Schallprobenhalter
- 8, 8': Grundkörper
- 8o, 8o': Grundkörperoberfläche
- 9: Schallquellen
- 9o: Schallquellenoberfläche
- 10: Koppelmediumkanal
- 11: Fixiermittel
- 12: Ladestifte
- 13: Koppelmedium
- 14: Substratstapel
- 14o: Substratstapelfixieroberfläche
- 14m: Substratstapelmessoberfläche
- 15: Steg
- 16: Teilstrahlen
- 17: Amplituden- bzw. Phasenmaximum
- 18: Amplituden- bzw. Phasenminimum
- 19: Schallwelle
- 20: Triggersignal
- 21: Anlage
- d1: Koppelmediumschichtdicke
- R₉ₒ: Schallquellenoberflächenrauheit
- R₁₄ₒ: Substratstapeloberflächenrauheit
- PB, PB', PB": Primärstrahl
- SB: Sekundärstrahl
- IB: Interferenzstrahl

## Patentansprüche

1. Metrologievorrichtung zur Überprüfung eines Substrats, insbesondere Substratstapels (14), vorzugsweise eines gebondeten Substratstapels (14), mit folgenden Merkmalen:
- Schallbeaufschlagungsmitteln zur Erzeugung von Schallwellen und zur Beaufschlagung einer ersten Substratstapeloberfläche des Substrats, insbesondere Substratstapels, (14) mit den erzeugten Schallwellen (19),
- einem optischen System mit
a) einer Quelle (1) zur Ausgabe einer elektromagnetischen Strahlung, die in mindestens einen ersten Strahlengang und einen zweiten Strahlengang aufgeteilt sind/werden,
b) Mitteln zur Beaufschlagung einer Substratstapelmessoberfläche (14m) des Substrats, insbesondere Substratstapels (14), mit dem ersten Strahlengang,
c) Interferenzmitteln zur Bildung einer Interferenzstrahlung aus dem ersten und zweiten Strahlengang und
d) einem Detektor (5) zur Erfassung der Interferenzstrahlung,
- Auswertungsmitteln zur Auswertung der am Detektor (5) erfassten Interferenzstrahlung,
**dadurch gekennzeichnet, dass** die Schallbeaufschlagungsmittel und das optische System auf gegenüberliegenden Seiten des Substrats angeordnet sind.

2. Vorrichtung nach Anspruch 1, aufweisend einen Strahlteiler (3) zur Teilung der elektromagnetischen Strahlung in den ersten und zweiten Strahlengang.

3. Vorrichtung nach einem der vorhergehenden Ansprüche, wobei die Schallbeaufschlagungsmittel mindestens eine, vorzugsweise eine Vielzahl von, insbesondere separat ansteuerbaren, Schallquelle(n) (9) aufweisen.

4. Vorrichtung nach einem der vorhergehenden Ansprüche, wobei die Schallbeaufschlagungsmittel Fixiermittel (11) zur Fixierung des Substratstapels (14), insbesondere entlang einer Schallquellenoberfläche (9o) der Schallquellen (9), umfassen.

5. Vorrichtung nach einem der vorhergehenden Ansprüche, bei der zwischen den Schallbeaufschlagungmitteln und der ersten Substratstapeloberfläche ein Koppelmedium einbringbar ist.

6. Metrologieverfahren zur Überprüfung eines Substrats, insbesondere Substratstapels (14), vorzugsweise eines gebondeten Substratstapels (14), mit folgenden Schritten, insbesondere folgendem Ablauf:
- Bereitstellung von Schallbeaufschlagungsmitteln zur Erzeugung von Schallwellen,
- Beaufschlagung einer ersten Substratstapeloberfläche des Substrats, insbesondere Substratstapels (14), mit durch die Schallbeaufschlagungsmittel erzeugten Schallwellen,
- Beaufschlagung einer Substratstapelmessoberfläche (14m) des mit Schallwellen beaufschlagten Substrats, insbesondere Substratstapels (14), mit einem ersten Strahlengang einer aus einer Quelle (1) ausgegebenen elektromagnetischen Strahlung,
- Bildung einer Interferenzstrahlung (IB) aus dem ersten Strahlengang und einem zweiten Strahlengang der elektromagnetischen Strahlung,
- Erfassung der Interferenzstrahlung an einem Detektor (5),
- Auswertung der am Detektor erfassten Interferenzstrahlung, **dadurch gekennzeichnet, dass** Schallbeaufschlagungsmittel und die Quelle (1) auf gegenüberliegenden Seiten des Substrats angeordnet sind.

7. Verfahren nach Anspruch 6, wobei der erste Strahlengang so eingestellt wird, dass die Substratstapelmessoberfläche (14m) von dem ersten Strahlengang vollständig erfasst wird.

8. Verfahren nach einem der Ansprüche 6 oder 7, wobei der erste und der zweite Strahlengang gleichzeitig erzeugt und an einem Strahlteiler (3) geteilt werden.

9. Verfahren nach einem der Ansprüche 6 bis 8, wobei der erste und der zweite Strahlengang nach einer Reflexion des ersten Strahlenganges an der Substratstapelmessoberfläche (14m), insbesondere an dem Strahlteiler (3), vereint und zu dem Detektor (5) umgelenkt werden.

10. Verfahren nach einem der Ansprüche 6 bis 9, wobei die Beaufschlagung mit Schallwellen (19) durch mindestens eine, vorzugsweise eine Vielzahl von, insbesondere separat ansteuerbaren, Schallquelle(n) (9) erfolgt.

11. Verfahren nach einem der Ansprüche 6 bis 10, wobei eine Sequenz von, insbesondere unterschiedlichen, Schallmustern erzeugt wird, deren jeweils gebildete Interferenzstrahlung (IB) erfasst und zusammen ausgewertet wird.

## Claims

1. A metrology device for inspecting a substrate, particularly a substrate stack (14), preferably a bonded substrate stack (14), with the following features:
- sound application means for producing sonic waves and for applying the produced sound waves (19) to a first substrate stack surface of the substrate, particularly the substrate stack (14),
- an optical system having
a) a source (1) for outputting electromagnetic radiation, which are split into at least one first beam path and one second beam path,
b) means for loading a substrate stack measuring surface (14m) of the substrate, particularly the substrate stack (14), with the first beam path,
c) interference means for forming an interference radiation made up of the first and second beam paths and
d) a detector (5) for detecting the interference radiation,
- analysing means for analysing the interference radiation detected at the detector (5),
**characterized in that** the sound application means and the optical system are located on opposite sides of the substrate.

2. The device according to claim 1, having a beam splitter (3) for splitting the electromagnetic radiation into the first and second beam paths.

3. The device according to one of the preceding claims, wherein the sound loading means have at least one, preferably a multiplicity of, in particular separately controllable sound source(s) (9).

4. The device according to one of the preceding claims, wherein the sound loading means comprise fixing means (11) for fixing the substrate stack (14), particularly along a sound source surface (9o) of the sound sources (9).

5. The device according to one of the preceding claims, in which a coupling medium can be introduced between the sound loading means and the first substrate stack surface.

6. A metrology method for inspecting a substrate, particularly a substrate stack (14), preferably a bonded substrate stack (14), having the following steps, particularly the following procedure:
- Providing sound application means for producing sonic waves,
- applying sound waves produced by the sound application means to a first substrate stack surface of the substrate, particularly the substrate stack (14),
- applying a first beam path of electromagnetic radiation output from a source (1) to a substrate stack measuring surface (14m) of the substrate applied with sound waves, particularly the substrate stack (14),
- forming interference radiation (IB) made up of the first beam path and a second beam path of the electromagnetic radiation,
- detecting the interference radiation at a detector (5),
- analysing the interference radiation detected at the detector, **characterized in that** sound application means and the source (1) are located on opposite sides of the substrate.

7. The method according to claim 6, wherein the first beam path is set in such a manner that the substrate stack measuring surface (14m) is captured completely by the first beam path.

8. The method according to one of claims 6 or 7, wherein the first and the second beam path are generated simultaneously and split at a beam splitter (3).

9. The Method according to one of claims 6 to 8, wherein the first and the second beam path are joined after reflection of the first beam path at the substrate stack measuring surface (14m), particularly at the beam splitter (3), and deflected to the detector (5).

10. The method according to one of claims 6 to 9, wherein the loading with sound waves (19) by at least one, preferably a multiplicity of, in particular separately controllable, sound source(s) (9).

11. The method according to one of claims 6 to 10, wherein a sequence of, in particular different, sound patterns is generated, the interference radiation (IB) of which formed in each case is detected and analysed together.

## Revendications

1. Dispositif de métrologie pour contrôler un substrat, en particulier une pile de substrats (14), de préférence une pile de substrats (14) collée, comprenant les attributs suivants :
- des moyens de sollicitation sonore pour produire des ondes sonores et pour solliciter une première surface de pile de substrats du substrat, en particulier de la pile de substrats (14) avec les ondes sonores (19) produites,
- un système optique comprenant
a) une source (1) pour émettre un rayonnement électromagnétique qui est divisé en au moins un premier trajet de faisceau et un second trajet de faisceau,
b) des moyens pour solliciter une surface de mesure de pile de substrats (14m) du substrat, en particulier de la pile de substrats (14), avec le premier trajet de faisceau,
c) des moyens d'interférence pour former un rayonnement d'interférence à partir des premier et second trajets de faisceau et
d) un détecteur (5) pour détecter le rayonnement d'interférence,
- des moyens d'évaluation pour évaluer le rayonnement d'interférence détecté sur le détecteur (5),
**caractérisé en ce que** les moyens de sollicitation sonore et le système optique sont disposés sur des côtés opposés du substrat.

2. Dispositif selon la revendication 1, présentant un séparateur de faisceaux (3) pour séparer le rayonnement électromagnétique en les premier et second trajets de faisceaux.

3. Dispositif selon l'une des revendications précédentes, dans lequel les moyens de sollicitation sonore présentent au moins une, de préférence une pluralité de source(s) sonore(s) (9) pouvant être commandées de manière séparée en particulier.

4. Dispositif selon l'une des revendications précédentes, dans lequel les moyens de sollicitation sonore comprennent des moyens de fixation (11) pour fixer la pile de substrats (14), en particulier le long d'une surface de source sonore (9o) des sources sonores (9).

5. Dispositif selon l'une des revendications précédentes, dans lequel un agent de couplage peut être inséré entre les moyens de sollicitation sonore et la première surface de pile de substrats.

6. Dispositif de métrologie pour contrôler un substrat, en particulier une pile de substrats (14), de préférence une pile de substrats (14) collée, comprenant les étapes suivantes, en particulier le déroulement suivant :
- fourniture de moyens de sollicitation sonore pour produire des ondes sonores,
- sollicitation d'une première surface de pile de substrats du substrat, en particulier de la pile de substrats (14), avec des ondes sonores produites par les moyens de sollicitation sonore,
- sollicitation d'une surface de mesure de pile de substrats (14m) du substrat, en particulier de la pile de substrats (14), sollicité(e) par les ondes sonores, avec un premier trajet de faisceau d'un rayonnement électromagnétique émis par une source (1),
- formation d'un rayonnement d'interférence (IB) à partir du premier trajet de faisceau et d'un second trajet de faisceau du rayonnement électromagnétique,
- détection du rayonnement d'interférence sur un détecteur (5),
- évaluation du rayonnement d'interférence détecté sur le détecteur, **caractérisé en ce que** les moyens de sollicitation sonore et la source (1) sont disposés sur des côtés opposés du substrat.

7. Procédé selon la revendication 6, dans lequel le premier trajet de faisceau est réglé de façon à ce que la surface de mesure de pile de substrats (14m) soit détectée intégralement par le premier trajet de faisceau.

8. Procédé selon la revendication 6 ou 7, dans lequel les premier et second trajets de faisceau sont produits en même temps et séparés sur un séparateur de faisceaux (3).

9. Dispositif selon l'une des revendications 6 à 8, dans lequel les premier et second trajets de faisceau sont réunis après une réflexion du premier trajet de faisceau sur la surface de mesure de pile de substrats (14m), en particulier sur le séparateur de faisceaux (3), et déviés vers le détecteur (5).

10. Dispositif selon l'une des revendications 6 à 9, dans lequel la sollicitation avec des ondes sonores (19) est effectuée par au moins une, de préférence une pluralité de source(s) sonore(s) (9) pouvant être commandées de manière séparée en particulier.

11. Dispositif selon l'une des revendications 6 à 10, dans lequel une séquence de modèles sonores, en particulier différents, est produite, dont le rayonnement d'interférence (IB) respectivement formé est détecté et évalué conjointement.
